(19) Europäisches Patentamt
European Patent Office
Office européen des brevets

(11) **EP 2 615 675 B1**

(12) **EUROPEAN PATENT SPECIFICATION**

(45) Date of publication and mention of the grant of the patent:
**24.07.2019 Bulletin 2019/30**

(51) Int Cl.:
*H01M 8/02* *(2016.01)*      *H01M 8/10* *(2016.01)*
*H01M 8/0213* *(2016.01)*    *H01M 8/0221* *(2016.01)*
*H01M 8/0226* *(2016.01)*    *H01M 8/0258* *(2016.01)*
*H01M 8/1018* *(2016.01)*

(21) Application number: **11823401.2**

(22) Date of filing: **22.08.2011**

(86) International application number:
**PCT/JP2011/068822**

(87) International publication number:
**WO 2012/032922 (15.03.2012 Gazette 2012/11)**

(54) **FUEL CELL SEPARATOR**

BRENNSTOFFZELLENSEPARATOR

SÉPARATEUR DE PILES À COMBUSTIBLE

(84) Designated Contracting States:
**DE FR GB**

(30) Priority: **10.09.2010   JP 2010202846**

(43) Date of publication of application:
**17.07.2013   Bulletin 2013/29**

(73) Proprietor: **Nisshinbo Chemical Inc.**
**Chuo-ku**
**Tokyo 103-8650 (JP)**

(72) Inventor: **TANNO Fumio**
**Chiba-shi**
**Chiba 267-0056 (JP)**

(74) Representative: **Mewburn Ellis LLP**
**City Tower**
**40 Basinghall Street**
**London EC2V 5DE (GB)**

(56) References cited:
**EP-A1- 2 048 731          EP-A2- 1 542 300**
**WO-A1-2007/018185     JP-A- 2002 060 639**
**JP-A- 2003 151 574       JP-A- 2004 055 458**
**JP-A- 2004 335 121       JP-A- 2006 019 252**
**JP-A- 2006 066 138       JP-A- 2007 149 467**
**JP-A- 2009 152 176       US-A1- 2006 263 670**

**Description**

TECHNICAL FIELD

The present invention relates to a fuel cell separator.

BACKGROUND ART

One role of the fuel cell separator is to confer each unit cell with electrical conductivity. In addition, separators provide flow channels for the supply of fuel and air (oxygen) to the unit cells and also serve as boundary walls separating the unit cells.

Characteristics required of a separator thus include a high electrical conductivity, a high impermeability to gases, chemical stability, heat resistance and hydrophilicity.

Of these characteristics, techniques for increasing the electrical conductivity and the hydrophilicity include the methods disclosed in Patent Documents 1 to 6.

For example, Patent Documents 1 and 2 disclose separators in which the surface has been hydrophilized by blasting treatment.

However, in Patent Documents 1 and 2, because hydrophilizing treatment is carried out by blasting alone, the mold release agent, resin components and the like present at the separator surface cannot be fully removed. Hence, volatiles included in the mold release agent and resin components bleed out due to heat treatment when bonding separators together or when molding a fluoroplastic gasket material onto the separator, contaminating the separator surface.

Patent Document 3 discloses a separator having a surface that has been subjected to blasting treatment, then plasma-treated to introduce hydrophilic groups.

However, the technique according to Patent Document 3 has the drawback that the hydrophilic groups introduced onto the separator surface vanish when separators are bonded together or when a fluoroplastic gasket is molded onto the separator. Moreover, as in the cases of Patent Documents 1 and 2, another drawback with the method of Patent Document 3 is that volatiles included in the mold release agent and resin components bleed out and contaminate the separator surface.

Patent Document 4 discloses a separator of excellent electrical conductivity in which the surface has been irradiated with a YAG laser, thereby carbonizing a resin layer.

However, in treatment with a YAG laser, although the resin at the center of the laser spot is carbonized, resin remains behind at the spot periphery. As a result, the contact resistance cannot be sufficiently reduced, in addition to which the residual resin components leach out during power generation.

Patent Document 5 discloses a separator in which hydrophilic groups have been introduced onto the surface by irradiating the surface with a laser having a power of 3 to 15 W and a pulse duration of 50 $\mu$s.

However, in this treatment, because the laser used has a long pulse duration, the peak power is low and treating the separator surface takes too much time. Hence, the separator undergoes heating during such treatment, as a result of which warping of the separator arises.

Patent Document 6 discloses a separator in which the inner surfaces of grooves serving as gas flow channels on the separator have been irradiated with an infrared laser, thereby introducing hydrophilic groups onto the inner surfaces of the grooves.

However, in such separators, because the separator surface that comes into contact with the gas diffusion electrode has not been laser treated, when the water produced at the air electrode during power generation by the fuel cell passes through the gas diffusion electrode and diffuses to the fuel electrode, it gives rise to blockage between the electrode and the separator.

EP1542300A2 describes fuel cell separators which are made by shaping a composition that includes a thermosetting resin, an artificial graphite with an average particle size of 20 to 70 $\mu$m and an internal mold release agent and which have a surface with an average roughness Ra of 1.0 to 5.0 $\mu$m are very hydrophilic, and thus facilitate the removal of water that forms during power generation by the fuel cell. Such separators also have a low contact resistance with electrodes in the fuel cell.

EP2048731A1 describes a resin composition for fuel cell separator, comprising an epoxy resin; a curing agent; a curing accelerator; and a carbon material, wherein the epoxy resin or the curing agent has a softening temperature of from 40 to 90°C, and wherein the carbon material comprises a low crystalline artificial graphite having an average particle diameter of from 60 to 500 $\mu$m in an amount of from 5 to 100% by mass of the carbon material.

JP2006019252 describes a separator for a polymer electrolyte fuel cell contains electrically conductive carbon and a binder that binds the electrically conductive carbon.

US20060263670A1 describes a fuel cell bipolar plate obtained by subjecting a body shaped from a specific composition to surface roughening treatment and atmospheric pressure plasma treatment has a gas flow channel face with specific surface characteristics which endow the bipolar plate with an excellent and long-lasting hydrophilicity that enables water which forms during power generation by the fuel cell to be easily drained off, and which also provide the bipolar plate with a low contact resistance with electrodes in the fuel cell.

PRIOR-ART DOCUMENTS

PATENT DOCUMENTS

Patent Document 1: JP No. 4257544
Patent Document 2: JP-A 2005-197222
Patent Document 3: JP-A 2006-331673
Patent Document 4: JP-A 2004-335121
Patent Document 5: JP No. 4148984
Patent Document 6: JP-A 2009-152176

SUMMARY OF THE INVENTION

PROBLEMS TO BE SOLVENT BY THE INVENTION

It is therefore an object of the present invention to provide a fuel cell separator having on a surface thereof grooves that serve as flow channels for the supply and removal of gases, which fuel cell separator is endowed with a high electrical conductivity, a high hydrophilicity, and a low leachability.

MEANS FOR SOLVING THE PROBLEMS

The inventor has conducted extensive investigations in order to attain the above object, and has discovered as a result that by laser treating the surface under specific power and pulse duration conditions, there can be obtained a fuel cell separator having a high electrical conductivity and hydrophilicity, and having also a low leachability.
In a first aspect, the present invention provides a method for producing a fuel cell separator comprising:

molding a composition comprising a graphite powder, an epoxy resin, a phenolic resin, a curing accelerator and an internal mold release agent to form a molded article wherein the phenolic resin is in an amount which is from 0.98 to 1.02 hydroxyl equivalents per equivalent of the epoxy resin; and
subjecting a surface of said molded article to laser irradiation treatment wherein said laser irradiation conditions are a power of 100 to 200 W and a pulse duration of 30 to 200 ns; wherein said fuel cell separator possesses characteristics (1) to (6) below:

(1) residues from laser irradiation on a surface of the separator, expressed as an area ratio, of 5% or less as determined using an optical microscope in accordance with paragraph [0036] of the description;
(2) an arithmetic mean roughness Ra at the separator surface of from 0.80 to 1.50 $\mu$m wherein said arithmetic mean roughness Ra is measured using a surface roughness tester having a probe tip diameter of 5 pm;
(3) a static contact angle at the separator surface of from 15 to 60° wherein said static contact angle is measured using a CA-DT A contact angle meter from Kywa Interface Science Co., Ltd;
(4) a contact resistance at the separator surface of from 3 to 7 m$\Omega$·cm$^2$ as determined according to the contact resistance method in accordance with paragraph [0036] of the description;
(5) an electrical conductivity by leachate obtained after immersing the separator for 168 hours in ion-exchanged water at 90°C, under conditions where the weight ratio of ion-exchanged water to separator = 9:1, of 1.2 $\mu$S/cm or less wherein said electrical conductivity is measured at 25 to 30° C; and
(6) changes in surface roughness after 2,000 hours of immersion in, respectively, 90°C ion-exchanged water and 150° C ion-exchanged water, which are each within 0.3 $\mu$m of the surface roughness prior to immersion wherein said changes in surface roughness are measured using a surface roughness tester having a tip probe diameter of 5 $\mu$m.

In a second aspect, the present invention provides a fuel cell separator obtained by the method of the first aspect of the invention wherein the fuel cell separator possesses characteristics (1) to (7) below:

(1) residues from laser irradiation on a surface of the separator, expressed as an area ratio, of 5% or less as determined using an optical microscope in accordance with paragraph [0036] of the description;

(2) an arithmetic mean roughness Ra at the separator surface of from 0.80 to 1.50 $\mu$m wherein said arithmetic mean roughness Ra is measured using a surface roughness tester having a probe tip diameter of 5 pm;

(3) a static contact angle at the separator surface of from 15 to 60° wherein said static contact angle is measured using a CA-DT A contact angle meter from Kywa Interface Science Co., Ltd;

(4) a contact resistance at the separator surface of from 3 to 7 m$\Omega$·cm$^2$ as determined according to the contact resistance method in accordance with paragraph [0036] of the description;

(5) an electrical conductivity by leachate obtained after immersing the separator for 168 hours in ion-exchanged water at 90°C, under conditions where the weight ratio of ion-exchanged water to separator = 9:1, of 1.2 $\mu$S/cm or less wherein said electrical conductivity is measured at 25 to 30°C; and

(6) changes in surface roughness after 2,000 hours of immersion in, respectively, 90°C ion-exchanged water and 150°C ion-exchanged water, which are each within 0.3 $\mu$m of the surface roughness prior to immersion wherein said changes in surface roughness are measured using a surface roughness tester having a probe tip diameter of 5 pm; and

(7) a mean spacing S between local peaks at the separator surface of from 30 to 50 $\mu$m wherein said mean spacing S is measured using a surface roughness tester having a probe tip diameter of 5 $\mu$m.

Preferred features of the method and fuel cell separator are set out in the dependent claims.

ADVANTAGEOUS EFFECTS OF THE INVENTION

The invention provides a fuel cell separator having a high electrical conductivity and hydrophilicity, and having also a low leachability.

BRIEF DESCRIPTION OF THE DIAGRAMS

FIG. 1 presents the infrared absorption spectra obtained by attenuated total reflectance infrared spectroscopy (ATR) of the surfaces of fuel cell separators. The top spectrum shows the measurement results for the fuel cell separator obtained in Example 1, the middle spectrum shows the measurement results for the fuel cell separator obtained in Example 5, and the bottom spectrum shows the measurement results for the fuel cell separator obtained in Comparative Example 1.

FIG. 2 is a digital image of the surface of the fuel cell separator in Comparative Example 8. The grayish coating on the surfaces of the irregular masses of rectangular shape represents residues following laser irradiation. Under an optical microscope, this grayish coating exhibits a color that is light brown to brown.

FIG. 3 is an image obtained by image processing the digital image of the surface of the fuel cell separator in Comparative Example 8, and extracting and digitizing the brown regions.

FIG. 4 is a digital image of the surface of the fuel cell separator in Example 4. Substantially no grayish coating (residues following laser irradiation) is observed on the surfaces of the irregular masses of rectangular shape.

FIG. 5 is an image obtained by image processing the digital image of the surface of the fuel cell separator in Example 4, and extracting and digitizing the brown regions.

BEST MODE FOR CARRYING OUT THE INVENTION

The invention is described more fully below.

The type of laser used in the invention is not particularly limited, provided it is capable of oscillation at a power of 100 to 200 W and a pulse duration of 30 to 200 ns. Illustrative examples include YAG lasers, carbon dioxide lasers, excimer lasers and fiber lasers. Of these, from the standpoint of focal depth, focusability and oscillator life, a fiber laser is preferred.

The wavelength of the laser is not particularly limited; that is, use may be made of lasers of various wavelengths, such as infrared rays, visible light rays, ultraviolet rays and x-rays. However, in the present invention, an infrared laser is especially preferred. The wavelength of the infrared laser is preferably from about 0.810 to about 1.095 $\mu$m.

The laser irradiation conditions, as mentioned above, are a power of 100 to 200 W and a pulse duration of 30 to 200 ns. At a power below 100 W, removing resin components from the surfacemost layer of the separator is difficult, whereas at above 200 W, the separator heats up during laser processing, giving rise to warping, as a result of which the contact resistance may increase.

At a pulse duration of less than 30 ns, the pulse energy becomes too high, as a result of which the separator heats up during laser processing, which may give rise to warping. On the other hand, at a pulse duration of more than 200 ns, the pulse energy is low and laser processing takes time, as a result of which warping may arise due to heat buildup by the separator during laser processing. To further reduce the occurrence of warping, the pulse duration is more preferably from 30 to 150 ns, even more preferably from 30 to 120 ns, and still more preferably form 30 to 60 ns.

Moreover, it is preferable for the laser used in the invention to have an energy distribution, as measured with a beam profiler, that is flat-topped.

When the energy distribution is Gaussian, there is a difference in energy density between the center and peripheral areas of the laser spot, which makes it difficult to uniformly treat the surface. As a result, roughness irregularities may arise and resin components may remain behind. However, such drawbacks are absent when the laser beam has a flat-topped energy distribution.

Moreover, the overlap ratio of laser irradiation spots is preferably from 5 to 50%, and more preferably from 30 to 40%. At an overlap ratio below 5%, resin removal from the surface layer of the separator may be inadequate, which may lower the electrical conductivity and hydrophilicity. On the other hand, at an overlap ratio greater than 50%, the irradiated areas may end up being deeply eroded.

The inventive fuel cell separator obtained by laser irradiation treatment under the above conditions has surface layer resin components removed to a degree where the absorption bands attributable to epoxy resins and phenolic resins are absent (cannot be identified) on an infrared absorption spectrum obtained by attenuated total reflectance infrared spectroscopy (ATR) of the surface following laser irradiation. In addition, surface residues following laser irradiation (areas where the resin composition has carbonized/decomposed and remains on the surface) of the sort seen in Patent Document 4 above are either very infrequent or entirely absent upon visual inspection, and the separator possesses above characteristics (1) to (7). Here, the surface residues do not dislodge from the separator surface with just a light touch, although there is a risk of such residues falling from the surface in an environment where the fuel cell operates for an extended period of time. Moreover, when such residues have an area ratio greater than 5%, the loss of the residue may increase the surface roughness of the separator, leading to a smaller contact surface area between the electrodes and the separator, which may in turn increase the contact resistance. In addition, it is also possible that decomposition products or soluble ingredients of the resin components will leach out from the residues during power generation.

It is preferable for there to be no residues (0%) on the separator surface, although excessive laser irradiation is not necessary. The area ratio of residues on the separator surface is more preferably 3% or less, and most preferably 2% or less.

When the arithmetic mean roughness Ra of the separator surface is less than 0.80 $\mu$m, the electrical conductivity and hydrophilicity decrease on account of the influence by resin components remaining on the surfacemost layer. On the other hand, at Ra greater than 1.50 $\mu$m, the hydrophilicity increases, but graphite powder is lost more readily from the separator surface, as a result of which the electrical conductivity of the separator surface decreases and the contact resistance between the electrodes and the separator may increase.

Ra is more preferably from 0.9 to 1.4 $\mu$m, and most preferably from 1.0 to 1.3 $\mu$m.

Moreover, in this case, the separator surface has a mean spacing S between local peaks thereon of preferably from 30 to 50 $\mu$m, and more preferably from 35 to 45 $\mu$m. By setting the arithmetic mean roughness Ra in the above-indicated range and also setting the mean spacing S between local peaks in the foregoing range, the hydrophilicity of the separator surface can be further increased.

Also, in the fuel cell separator of the invention, to further lower the contact resistance, the warpage measured by the subsequently described technique is preferably 100 $\mu$m or less, more preferably 80 $\mu$m or less, and even more preferably 70 $\mu$m or less.

In cases where treatment has been carried out under the above-mentioned laser irradiation conditions of the invention, a separator with a small enough warpage to satisfy the foregoing range can easily be obtained.

The fuel cell separator of the invention additionally possesses a high hydrophilicity, i.e., a static contact angle of 15 to 60°, and a high electrical conductivity, i.e., a contact resistance of from 3 to 7 m$\Omega$.cm$^2$. To further increase the hydrophilicity and the electrical conductivity, the static contact angle is preferably from 15 to 58°, and especially from 20 to 56°, and the contact resistance is preferably from 4 to 7 m$\Omega$·cm$^2$. By using the surface treatment conditions of this invention, a fuel cell separator which satisfies these ranges can be easily obtained.

In addition, the fuel cell separator of the invention has an electrical conductivity by leachate obtained after 168 hours of immersion in ion-exchanged water at 90°C, under conditions where the weight ratio of ion-exchanged water to separator = 9:1, of 1.2 $\mu$S/cm or less. Moreover, the separator of the invention has changes in surface roughness after 2,000 hours of immersion in, respectively, 90°C ion-exchanged water and 150°C ion-exchanged water, which are each within 0.3 $\mu$m, and even within 0.2 $\mu$m, of the surface roughness prior to immersion; that is, the separator undergoes little leaching, loss of fine graphite particles and the like.

Moreover, the fuel cell separator of the invention has a glass transition point of preferably from 140 to 165°C, and more preferably from 150 to 165°C. At 140°C and above, regardless of the separator thickness, warping of the separator is held within a permissible range when the stack is assembled, and the heat resistance of the separator is also adequate. On the other hand, at 165°C and below, owing to the suitable crosslink density of the resin component, the separator has a suitable flexibility, enabling separator damage during fuel cell stack assembly to be effectively prevented.

Illustrative examples of the graphite material used to manufacture the fuel cell separator of the invention include natural graphite, synthetic graphite obtained by firing needle coke, synthetic graphite obtained by firing vein coke, graphite obtained by grinding electrodes to powder, coal pitch, petroleum pitch, coke, activated carbon, glassy carbon, acetylene black and Ketjenblack. These may be used singly, or two or more may be used in combination.

The mean particle size (d = 50) of the graphite material is not particularly limited. However, in order to suitably maintain voids between the graphite particles, make the surface area of contact between graphite particles larger, and increase the electrical conductivity (decrease the contact resistance) by suppressing the formation of surface irregularities following resin removal, the mean particle size is preferably from 10 to 130 $\mu$m, more preferably from 20 to 110 $\mu$m, even more preferably from 20 to 70 $\mu$m, and still more preferably from 30 to 60 $\mu$m.

That is, if the mean particle size of the graphite particles is 10 $\mu$m or more, when the separator has been irradiated with a laser, it is possible to remove resin from the separator surface layer and thereby increase the electrical conductivity at the surface of the separator, along with which the contact surface area between graphite particles at the interior of the separator can be fully maintained, thus making it possible to improve also the electrical conductivity in the thickness direction of the separator.

Also, at a mean particle size of 130 $\mu$m or less, because the voids between the graphite particles are suitable in size, even if the resin that had been filled into the voids between the graphite particles on the separator surface is removed by laser irradiation, large irregularities do not form on the separator surface. As a result, there is no rise in the contact resistance at the separator surface, and thus no decline in the electrical conductivity of the separator itself.

Moreover, when a fuel cell separator obtained by molding a composition containing graphite powder having a mean particle size (d = 50) set within the range of 10 to 130 $\mu$m is subjected to laser irradiation and the resin between the graphite particles in the surface layer thereof is removed, the surface roughness of the separator can be adjusted to the above-described arithmetic mean roughness Ra and the mean spacing S between local peaks. As a result, the separator can be imparted with both an excellent hydrophilicity and a low contact resistance.

To increase even further the hydrophilicity-improving effects and the contact resistance-decreasing effects of the fuel cell separator of the invention, when the mean particle size (d = 50 $\mu$m) of the graphite material used is in the range of 10 to 130 $\mu$m, it is more preferable for the content of fine powder having a particle size of 5 $\mu$m or below to be 5% or less and for the content of coarse powder having a particle size of at least 200 $\mu$m to be 3% or less. If the mean particle size (d = 50 $\mu$m) of the graphite material used is in the range of 30 to 60 $\mu$m, it is even more preferable for the content of fine powder having a particle size of 5 $\mu$m or below to be 3% or less and for the content of coarse powder having a particle size of at least 200 $\mu$m to be 1% or less.

The epoxy resin is not subject to any particular limitation, so long as it has epoxy groups. Illustrative examples include o-cresol-novolak type epoxy resins, phenol-novolak type epoxy resins, bisphenol A-type epoxy resins, bisphenol F-type epoxy resins, biphenyl-type epoxy resins, brominated epoxy resins and dicyclopentadiene-type epoxy resins. Of these, o-cresol-novolak type epoxy resins and phenol-novolak type epoxy resins are preferred, and o-cresol-novolak type epoxy resins are more preferred.

To further increase the heat resistance of the fuel cell separator obtained, the epoxy resin has an epoxy equivalent weight of preferably from 180 to 210 g/eq, more preferably from 185 to 205 g/eq, and even more preferably from 190 to 200 g/eq.

In addition, to further increase the heat resistance of the fuel cell separator obtained and to provide also a good molding processability, the ICI viscosity of the epoxy resin at 150°C is preferably from 0.15 to 0.80 Pa·s, more preferably from 0.17 to 0.75 Pa·s, and still more preferably from 0.24 to 0.70 Pa·s. By using an epoxy resin having an ICI viscosity in this range, the resin has a suitable molecular weight and the fuel cell separator obtained has a good heat resistance. In addition, the resin flow properties are good, as a result of which the molding pressure can be lowered and a good molding processability can be obtained.

Examples of phenolic resins include novolak-type phenolic resins, cresol-type phenolic resins and alkyl-modified phenolic resins. These may be used singly or two or more may be used in combination.

In the fuel cell separator of the invention, the phenolic resin serves as a curing agent for the epoxy resin. The hydroxyl equivalent weight of the phenolic resin is not particularly limited, although a hydroxyl equivalent weight of from 103 to 106 g/eq is preferred in order to further increase the heat resistance of the separator obtained.

In addition, to further increase the heat resistance of the fuel cell separator obtained and to provide a good molding processability, the ICI viscosity of the phenolic resin at 150°C is preferably from 0.15 to 0.70 Pa·s, more preferably from 0.20 to 0.60 Pa·s, and still more preferably from 0.30 to 0.50 Pa·s. By using a phenolic resin having an ICI viscosity in this range, the resin has an appropriate molecular weight and the fuel cell separator obtained has a good heat resistance, in addition to which the flow properties of the resin are good, thereby resulting also in a good molding processability, such as the ability to lower the pressure during molding.

The curing accelerator is not particularly limited, so long as it accelerates the reaction of epoxy groups with the curing agent. Illustrative examples include triphenylphosphine (TPP), tetraphenylphosphine, diazabicycloundecene (DBU), dimethylbenzylamine (BDMA), 2-methylimidazole, 2-methyl-4-imidazole, 2-phenylimidazole, 2-phenyl-4-methylimidazole, 2-undecylimidazole and 2-heptadecylimidazole. These may be used singly or two or more may be used in combination.

The internal mold release agent is not particularly limited, and is exemplified by various types of internal mold release agents that have hitherto been used for molding separators. Illustrative examples include stearic acid wax, amide waxes, montanic acid wax, carnauba wax and polyethylene waxes. These may be used singly or two or more may be used in combination.

The combined content of epoxy resin and phenolic resin in the composition containing a graphite powder, an epoxy resin, a phenolic resin, a curing accelerator and an internal mold release agent (which composition is referred to below as the "fuel cell separator composition"), although not particular limited, is preferably from 10 to 30 parts by weight, and more preferably from 15 to 25 parts by weight, per 100 parts by weight of the graphite powder.

The content of the internal mold release agent in the fuel cell separator composition, although not particularly limited, is preferably from 0.1 to 1.5 parts by weight, and especially from 0.3 to 1.0 part by weight, per 100 parts by weight of the graphite powder. An internal mold release agent content of less than 0.1 part by weight may lead to poor mold release, whereas a content in excess of 1.5 parts by weight may hamper curing of the thermoset resins and lead to other problems as well.

In the above fuel cell separator composition, the epoxy resin, the phenolic resin and the curing accelerator make up the binder component.

Here, it is preferable to include from 0.98 to 1.02 parts by weight of the curing accelerator per 100 parts by weight of a mixture of the epoxy resin and the phenolic resin. When less than 0.98 part by weight of the curing accelerator is included, the binder component curing reaction may become slower or fail to proceed to a sufficient degree. On the other hand, at more than 1.02 parts by weight, the binder component curing reaction may become overly sensitive, possibly shortening the pot life.

The phenolic resin is included in an amount which is from 0.98 to 1.02 hydroxyl equivalents per equivalent of the epoxy resin. At an amount of phenolic resin which is less than 0.98 hydroxyl equivalent, unreacted epoxy resin will remain, which may result in the unreacted ingredients leaching out during power generation. Likewise, at an amount which is more than 1.02 hydroxyl equivalents, unreacted phenolic resin will remain, which may result in unreacted ingredients leaching out during power generation.

The fuel cell separator of the invention may be obtained by preparing the above-described fuel cell separator composition, molding the composition, then subjecting the surface of the molded article to laser irradiation treatment. Various methods known to the art may be employed as the method of preparing the composition and the method of molding the composition into a molded article.

For example, the composition may be prepared by mixing together the binder component resins, the graphite material and the internal mold release agent in specific proportions and in any suitable order. The mixer used at this time may be, for example, a planetary mixer, a ribbon blender, a Loedige mixer, a Henschel mixer, a rocking mixer or a Nauta mixer.

The method used to mold the molded article may be, for example, injection molding, transfer molding, compression molding, extrusion or sheet molding. When using a mold during molding, it is desirable to use a mold for the production of fuel cell separators which is capable of forming, on one or both sides at the surface of the molded article, grooves to serve as flow channels for the supply and removal of gases.

Because the above-described solid polymer fuel cell separator of the invention has a very high hydrophilicity and the contact resistance is held to a low level, fuel cells provided with this separator are able to maintain a stable power generation efficiency over an extended period of time. Moreover, the separator of the invention has very little residue from surface treatment, as a result of which the leachability is very low and does not lower fuel cell performance.

A solid polymer fuel cell is generally composed of a stack of many unit cells, each unit cell being constructed of a solid polymer membrane disposed between a pair of electrodes that are in turn sandwiched between a pair of separators which form flow channels for the supply and removal of gases. The solid polymer fuel cell separator of the invention may be used as some or all of the plurality of separators in the fuel cell.

EXAMPLES

Examples of the invention and Comparative Examples are given below by way of illustration and not by way of limitation.

The various properties in the examples below were measured by the following methods.

[1] Mean Particle Size

[Measured with a particle size analyzer (available from Nikkiso Co., Ltd.).

[2] Surface Characteristics (Ra, RSm and S values)

Measured using a surface roughness tester (Surfcom 14000, from Tokyo Seimitsu Co., Ltd.) having a probe tip diameter of 5 μm.

[3] Contact Resistance

(1) Carbon Paper + Separator Sample:

Two sheets of the respective separator samples produced as described above were placed together, one on top of the other, following which carbon papers (TGP-H060, produced by Toray Industries, Inc.) were placed above and below the two separator samples, and copper electrodes were subsequently placed above and below the resulting assembly of separator samples and carbon papers. Next, a surface pressure of 1 MPa was applied vertically to the entire assembly and the voltage was measured by the four-point probe method.

(2) Carbon Paper:

Copper electrodes were placed above and below a sheet of carbon paper, following which a surface pressure of 1 MPa was applied vertically thereto and the voltage was measured by the four-point probe method.

(3) Method for Calculating Contact Resistance:

The voltage drop between the separator samples and the carbon paper was determined from the respective voltages obtained in (1) and (2) above, and the contact resistance was computed as follows.

```
Contact Resistance =
    (voltage drop × surface area of contact)/current
```

Contact Angle

[4] Measured using a contact angle meter (model CA-DT·A, from Kyowa Interface Science Co., Ltd.).

Infrared Absorption Spectroscopy

[5] The laser irradiation-treated surfaces of the respective separators produced above were measured by total reflectance infrared spectroscopy using a Fourier transform infrared spectrometer (Nicolet is10 FT-IR, from Thermo Fisher Scientific). The number of scans carried out to obtain each spectrum was 32.

Warpage

[6] In accordance with JIS B 7517, a 200 mm square separator obtained by compression molding was placed on a platen, a height gauge was used to measure the maximum value and the minimum value, and the difference therebetween was treated as the warpage.

Extraction Test

[7] The electrical conductivity of the leachate obtained by immersing the separator in ion-exchanged water at 90°C for 168 hours, under conditions where the weight ratio of ion-exchanged water to separator = 9:1, was measured at 25 to 30° C.

[8] Measurement of Roughness after Immersion

(1) The surface roughness of the separator after 2,000 hours of immersion in 90°C ion-exchanged water, under conditions where the weight ratio of ion-exchanged water to separator = 9:1, was measured.

(2) The surface roughness of the separator after 2,000 hours of immersion in 150°C ion-exchanged water, under conditions where the weight ratio of ion-exchanged water to separator = 9:1, was measured.

[9] Determination of Surface Area Occupied by Separator Surface Residues

Using an optical microscope (model No.: LEXT OLS4000; light source, white LED epi-illuminator; from Olympus Corporation), the laser irradiation-treated face of the separator was enlarged at a magnification of 1,000×, and 258 $\mu$m square color digital images were obtained at each of five randomly selected sites on the laser irradiation-treated face. For each of the resulting color digital images, the brown regions (residue portions) having, in the CIE 1976 (L*a*b*) color system, an L value of 48 to 75, an a value of 8 to 10 and a b value of 10 to 15 were color extracted and digitally converted, and the surface area was measured. The area ratio of the overall image accounted for by the brown regions was then determined as a percentage. The area ratios of the respective images were averaged, and the value thus obtained was treated as the surface area occupied by residues on the separator surface.

[10] Glass Transition Point

Using a thermal analyzer (TMA 6100, from Seiko Instruments), measurement was carried out at a ramp-up rate of 1°C/min and under a load of 5 g. The point of inflection on the resulting thermal expansion coefficient curve was treated as the glass transition point.

[11] ICI Viscosity

The melt viscosity at 150°C was measured using a cone/plate type ICI viscometer. The measuring cone of the ICI viscometer was selected according to the specimen viscosity, a sample of the resin was set in place, and 90 seconds later the cone was rotated. The value indicated on the viscometer was read off 30 seconds after the start of cone rotation.

Examples 1 to 5, Comparative Examples 1 to 3

A fuel cell separator composition was prepared by charging a Henschel mixer with 100 parts by weight of a synthetic graphite powder (mean particle size: 60 $\mu$m at d50 in particle size distribution) obtained by firing needle coke, a binder component resin composed of 16 parts by weight of o-cresol-novolak type epoxy resin (epoxy equivalent weight, 210 g/eq; ICI viscosity, 0.7 Pa·s), 8 parts by weight of novolak-type phenolic resin (hydroxyl equivalent weight, 104 g/eq; ICI viscosity, 0.7 Pa·s) and 0.24 part by weight of 2-heptadecyl imidazole, and also with 0.5 part by weight of carnauba wax as the internal mold release agent, and mixing these ingredients together for 3 minutes at 1,000 rpm.

The resulting fuel cell separator composition was charged into a mold for producing fuel cell separators and compression-molded at a mold temperature of 185°C, a molding pressure of 20 MPa and a molding time of 30 seconds, thereby giving a molded article having a size of 200 mm × 200 mm and a thickness of 2 mm. The face of the resulting molded article on which grooves were provided as flow channels for the supply and removal of gases was irradiated with a fiber laser at a wavelength of 1.06 $\mu$m, a power of 200 W and a pulse duration of 60 ns as the power conditions, and at the various overlap ratios shown in Table 1, thereby giving fuel cell separators.

Table 1

| | Example | | | | | Comparative Example | | |
|---|---|---|---|---|---|---|---|---|
| | 1 | 2 | 3 | 4 | 5 | 1 | 2 | 3 |
| Overlap ratio (%) | 5 | 15 | 25 | 37 | 50 | -15 | 0 | 60 |
| Energy distribution of beam | flat-topped | flat-topped | flat-topped | flat-topped | flat-topped | flat-topped | flat-topped | flat-topped |
| Characteristic absorption by epoxy resin and phenolic resin | no | no | no | no | no | yes | yes | no |
| Residue on separator surface (%) | 1 | 2 | 2 | 3 | 5 | 1 | 2 | 12 |

(continued)

| | Example | | | | | Comparative Example | | |
|---|---|---|---|---|---|---|---|---|
| | 1 | 2 | 3 | 4 | 5 | 1 | 2 | 3 |
| Separator warpage ($\mu$m) | 40 | 30 | 20 | 50 | 50 | 40 | 40 | 40 |
| Contact resistance (m$\Omega\cdot$cm$^2$) | 7 | 6 | 4 | 4 | 5 | 10 | 10 | 10 |
| Static contact angle (°) | 56 | 48 | 40 | 36 | 15 | 75 | 70 | 15 |
| Electrical conductivity of leachate ($\mu$S/cm) | 1.2 | 1.0 | 1.2 | 1.0 | 1.0 | 1.0 | 0.9 | 1.0 |
| Surface roughness Ra ($\mu$m) | 0.81 | 0.91 | 1.00 | 1.30 | 1.50 | 0.56 | 0.77 | 1.80 |
| RSm ($\mu$m) | 90 | 93 | 88 | 91 | 131 | 125 | 120 | 148 |
| S ($\mu$m) | 39 | 36 | 40 | 43 | 47 | 38 | 40 | 49 |
| Ra after 2,000 hours immersion at 90°C ($\mu$m) | 0.85 | 0.93 | 1.10 | 1.30 | 1.50 | 0.57 | 0.79 | 2.00 |
| Ra after 2,000 hours immersion at 150°C ($\mu$m) | 0.87 | 0.94 | 1.10 | 1.40 | 1.60 | 0.57 | 0.79 | 2.40 |
| Glass transition point (° C) | 163 | 163 | 163 | 163 | 163 | 163 | 163 | 163 |

As shown in Table 1, in the fuel cell separators of Examples 1 to 5 obtained by laser irradiation at an overlap ratio of 5 to 50%, the irradiated surface was roughened to an arithmetic mean roughness Ra of 0.80 to 1.50 $\mu$m and a mean spacing S between local peaks of 30 to 50 $\mu$m, in addition to which resins were removed to a degree where the characteristic absorptions of resins at the separator surface could not be confirmed. Here, these laser-irradiated fuel cell separators had a low contact resistance of 4 to 7 m$\Omega\cdot$cm$^2$ and a low contact angle of 15 to 60°, indicating a high electrical conductivity and a high hydrophilicity.

By contrast, in the fuel cell separators of Comparative Examples 1 and 2 obtained by laser irradiation at an overlap ratio of 0% or less, it is apparent that, because the arithmetic mean roughness Ra of the irradiated surface was less than 0.80 $\mu$m and resin ingredients remained on the separator surface, both the contact resistance, at 10 m$\Omega\cdot$cm$^2$, and the contact angle, at 70° or more, were high.

In the fuel cell separator of Comparative Example 3 obtained by laser irradiation at an overlap ratio of 60%, resin components on the irradiated surface were removed to the same degree as in Examples 1 to 5 and the contact angle was 15°, indicating a high hydrophilicity. However, the irradiated surface had a high surface roughness Ra of 1.8. This suggests that the separator surface readily shed graphite powder, resulting in a small contact surface area between the electrodes and the separator, and thus leading to a higher contact resistance.

Also, in each of the fuel cell separators obtained in Examples 1 to 5 and Comparative Examples 1 and 2, because the level of residues on the separator surface was 5% or less and residues formed by the carbonization of resins at the surface could not be visually confirmed, it is apparent that little extraction occurred and that the change in roughness following immersion in hot water was small.

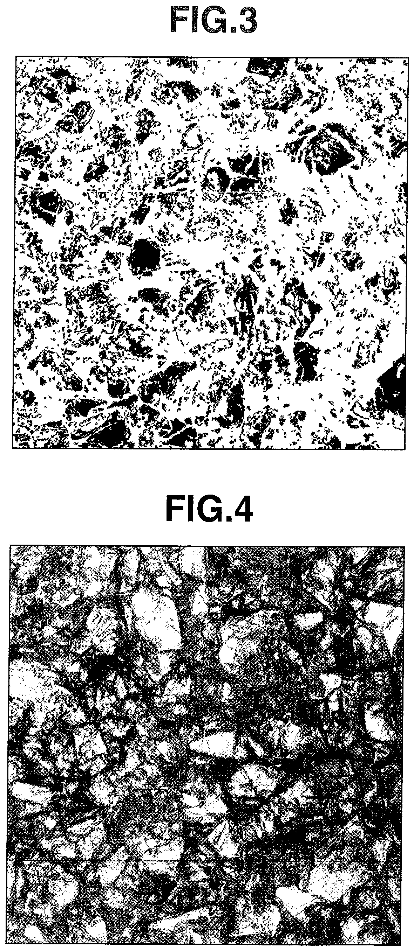

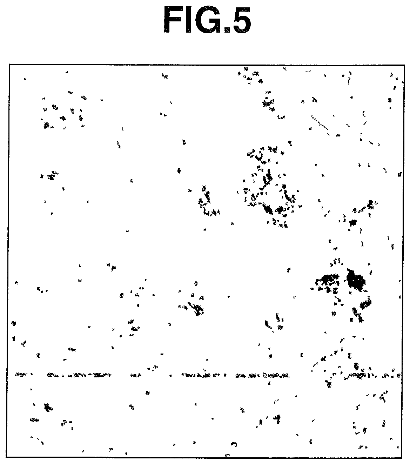

FIG. 4 shows a digital image of the surface of the fuel cell separator obtained in Example 4, and FIG. 5 shows an image obtained by image processing the image in Example 4, then extracting and digitizing the brown regions.

In the fuel cell separator obtained in Comparative Example 3, because the level of residues on the separator surface was 12%, which is high, although little extraction occurred, graphite powder was shed from the separator due to hot-water immersion, resulting in a large change in roughness.

Examples 6 to 10, Comparative Examples 4 to 6

In each of these examples, a fuel cell separator was obtained by preparing a fuel cell separator composition similar to that in Example 1, molding the composition under the same conditions to form a molded article, and irradiating the surface of the molded article using a 1.06 $\mu$m wavelength fiber laser at an overlap ratio of 35% and under the laser power conditions shown in Table 2.

Comparative Examples 7 and 8

In each of these examples, a fuel cell separator was obtained by preparing a fuel cell separator composition similar to that in Example 1, molding the composition under the same conditions to form a molded article, and irradiating the surface of the molded article using a 1.06 $\mu$m wavelength YAG laser at an overlap ratio of 35% and under the laser power conditions shown in Table 2.

Table 2

| | Example | | | | | Comparative Example | | | | |
|---|---|---|---|---|---|---|---|---|---|---|
| | 6 | 7 | 8 | 9 | 10 | 4 | 5 | 6 | 7 | 8 |
| Power (W) | 100 | 200 | 150 | 200 | 200 | 200 | 200 | 250 | 140 | 15 |
| Pulse duration | 30 ns | 60 ns | 120 ns | 120 ns | 200 ns | 20 ns | 250 ns | 60 ns | 120 ns | 50 $\mu$s |
| Energy distribution of beam | flat-topped | flat-topped | flat-topped | flat-topped | flat-topped | flat-topped | flat-topped | flat-topped | Gaussian | Gaussian |
| Characteristic absorption by epoxy resin and phenolic resin | no | no | no | no | no | no | no | no | no | no |
| Residue on separator surface (%) | 2 | 3 | 3 | 2 | 2 | 3 | 3 | 10 | 9 | 38 |
| Separator warpage ($\mu$m) | 70 | 30 | 20 | 50 | 80 | 130 | 150 | 200 | 50 | 300 |
| Contact resistance ($m\Omega \cdot cm^2$) | 4 | 3 | 5 | 7 | 7 | 14 | 18 | 20 | 10 | 25 |
| Static contact angle (°) | 32 | 20 | 20 | 40 | 40 | 20 | 20 | 20 | 20 | 20 |
| Electrical conductivity of leachate ($\mu$S/cm) | 1.2 | 1.0 | 1.2 | 1.0 | 1.0 | 1.2 | 1.2 | 1.0 | 3.2 | 4.2 |
| Surface roughness Ra ($\mu$m) | 1.00 | 1.20 | 1.30 | 1.00 | 1.00 | 1.30 | 1.30 | 1.60 | 1.00 | 3.50 |
| Ra after 2,000 hours immersion at 90°C ($\mu$m) | 1.00 | 1.20 | 1.30 | 1.10 | 1.10 | 1.30 | 1.30 | 1.80 | 1.50 | 5.20 |
| Ra after 2,000 hours immersion at 150°C ($\mu$m) | 1.00 | 1.30 | 1.40 | 1.20 | 1.20 | 1.40 | 1.40 | 2.00 | 2.10 | 8.30 |
| Glass transition point (°C) | 163 | 163 | 163 | 163 | 163 | 163 | 163 | 163 | 163 | 163 |

EP 2 615 675 B1

12

As shown in Table 2, the fuel cell separators obtained by fiber laser irradiation under the conditions in Examples 6 to 10 had warpages of less than 100 $\mu$m, in addition to which the separator surface resins were removed to a degree where the characteristic absorptions of the resins cannot be confirmed. As a result, these fuel cell separators had low contact resistances of 3 to 7 m$\Omega$·cm$^2$ and low contact angles of 15 to 60°, indicating high electrical conductivities and high hydrophilicities. Moreover, because these separators had a level of surface residues of 3% or less, which is so low that residues such as resin carbides cannot be visually confirmed at the surface, the electrical conductivities of the leachates obtained when the separators were immersed for 168 hours in 90°C ion-exchanged water were less than 1.5 $\mu$S/cm, indicating excellent chemical stability. Moreover, even after 2,000 hours of immersion in 90°C and 150°C ion-exchanged water, substantially no change in surface roughness arose, indicating a good stability.

By contrast, in the case of the separator irradiated with a fiber laser under the conditions in Comparative Example 4, because the laser had a pulse duration of 20 ns and thus a high pulse energy, the separator incurred heating during laser processing, giving rise to warping. As a result, it is apparent that the separator has an increased contact resistance.

In the case of the separator irradiated with a fiber laser under the conditions in Comparative Example 5, because the laser had a pulse duration of 250 ns and a low pulse energy, laser processing took time; during such processing, heat buildup occurred in the separator, giving rise to warping. As a result, it is apparent that the separator has an increased contact resistance.

In the case of the separator irradiated with a fiber laser under the conditions in Comparative Example 6, because the laser had a high power of 250 W, the separator incurred heating during laser processing, giving rise to warping. As a result, it is apparent that the separator has an increased contact resistance.

In the case of the separator irradiated with a YGA laser under the conditions in Comparative Example 7, because the laser beam had a Gaussian energy distribution, the level of residues on the separator surface was 9% and the presence of residues such as resin carbides on the separator surface was visually observable. Also, when the separator was immersed for 168 hours in 90°C ion-exchanged water, the resulting leachate had an electrical conductivity of 3.2 $\mu$S/cm, from which it was apparent that considerable extraction had occurred. Moreover, when this separator was immersed for 2,000 hours, resin residues fell from the separator surface, resulting in an increase in the surface roughness Ra from 1.0 $\mu$m to 1.5 $\mu$m.

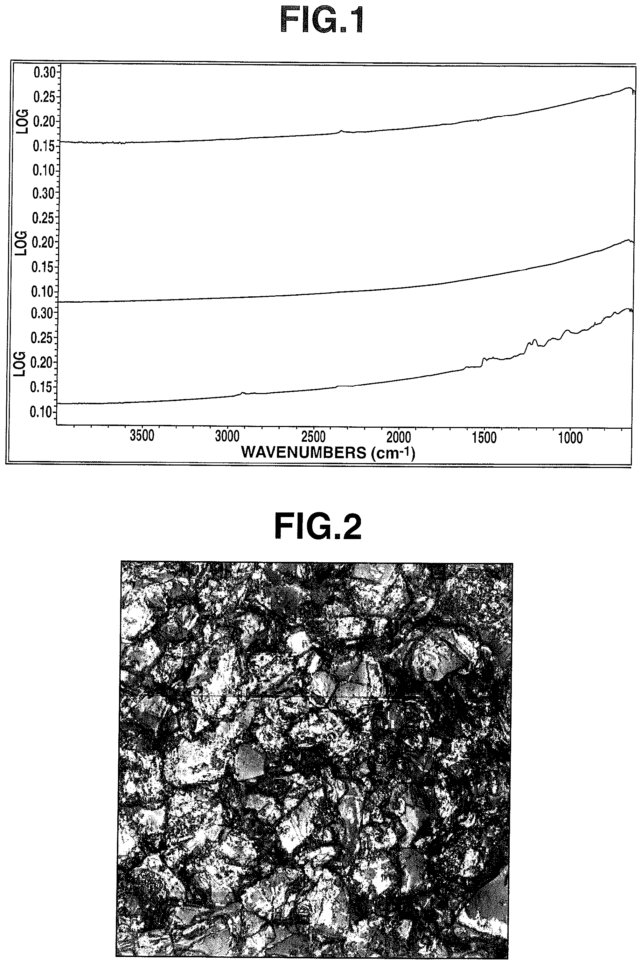

In the case of the separator irradiated with a YAG laser under the conditions in Comparative Example 8, because the laser had a pulse duration of 50 $\mu$s and thus a low pulse energy, laser processing took time; during such processing, heat buildup occurred in the separator, giving rise to warping. As a result, it is apparent that the separator has an increased contact resistance. Moreover, in this case as well, as shown in FIGS. 2 and 3, residues such as resin carbides were present on the separator surface at a high level of 38%. As a result, the electrical conductivity of the leachate obtained following immersion of the separator for 168 hours in 90°C ion-exchanged water was 4.2 $\mu$S/cm, indicating that a considerable amount of extraction occurred. The change in surface roughness following 2,000 hours of immersion in 90°C ion-exchanged water was also large.

Example 11

Aside from changing the graphite powder to synthetic graphite powder (mean particle size, 10 $\mu$m (d50)), a fuel cell separator composition was prepared and a molded article was obtained therefrom in the same way as in Example 1.

The face of the resulting molded article on which grooves were provided as flow channels for the supply and removal of gases was laser-irradiated under the same conditions as in Example 3, thereby giving a fuel cell separator.

Example 12

Aside from changing the graphite powder to a natural graphite powder (mean particle size, 30 $\mu$m (d50)), a fuel cell separator was obtained in the same way as in Example 11.

Example 13

Aside from changing the graphite powder to a synthetic graphite powder (mean particle size, 50 $\mu$m (d50)), a fuel cell separator was obtained in the same way as in Example 11.

Example 14

Aside from changing the graphite powder to a synthetic graphite powder (mean particle size, 130 $\mu$m (d50)), a fuel cell separator was obtained in the same way as in Example 11.

Table 3

| | Example | | | |
|---|---|---|---|---|
| | 11 | 12 | 13 | 14 |
| Mean particle size of graphite particles ($\mu$m) | 10 | 30 | 50 | 130 |
| Residue on separator surface (%) | 2 | 2 | 2 | 3 |
| Separator warpage ($\mu$m) | 40 | 40 | 30 | 40 |
| Contact resistance (m$\Omega \cdot$cm$^2$) | 7 | 5 | 4 | 5 |
| Static contact angle (°) | 50 | 26 | 32 | 17 |
| Electrical conductivity of leachate ($\mu$S/cm) | 1.2 | 1.2 | 1.0 | 1.2 |
| Surface roughness Ra ($\mu$m) | 0.82 | 1.00 | 1.10 | 1.50 |
| RSm ($\mu$m) | 90 | 98 | 110 | 131 |
| S ($\mu$m) | 38 | 42 | 44 | 47 |
| Ra after 2,000 hours immersion at 90°C ($\mu$m) | 1.20 | 1.20 | 1.00 | 1.20 |
| Ra after 2,000 hours immersion at 150°C ($\mu$m) | 1.20 | 1.20 | 1.00 | 1.20 |
| Glass transition point (°C) | 163 | 163 | 163 | 163 |

As shown in Table 3, because the irradiated surfaces of the fuel cell separators of Examples 11 to 14 obtained using graphite powders having mean particle sizes (d50) of 10 to 130 $\mu$m were roughened to arithmetic mean roughnesses Ra of 0.82 to 1.50 $\mu$m and mean spacings S between local peaks of 38 to 50 $\mu$m, and the separator surface resins were removed to a degree where the characteristic absorptions of the resins could not be confirmed, it is apparent that the separators had a low contact resistance of 3 to 7 m$\Omega \cdot$cm$^2$ and thus a high electrical conductivity.

Example 15

Aside from changing the epoxy resin to 15 parts by weight of a phenol-novolak type epoxy resin (epoxy equivalent weight, 183 g/eq; ICI viscosity, 0.35 Pa·s) and changing the amount of novolak-type phenolic resin included to 9 parts by weight, a fuel cell separator composition was prepared and a molded article was obtained in the same way as in Example 1.
The face of the resulting molded article on which grooves were provided as flow channels for the supply and removal of gases was irradiated with a laser under similar conditions as in Example 1, thereby giving a fuel cell separator.

Example 16

Aside from changing the epoxy resin to a phenol-novolak type epoxy resin (epoxy equivalent weight, 194 g/eq; ICI viscosity, 0.53 Pa·s), a fuel cell separator was obtained in the same way as in Example 15.

Example 17

Aside from changing the epoxy resin to an o-cresol-novolak type epoxy resin (epoxy equivalent weight, 199 g/eq; ICI viscosity, 0.29 Pa·s), a fuel cell separator was obtained in the same way as in Example 15.

Example 18

Aside from changing the epoxy resin to 16 parts by weight of an o-cresol-novolak type epoxy resin (epoxy equivalent weight, 210 g/eq; ICI viscosity, 0.8 Pa·s) and changing the amount of novolak-type phenolic resin included to 8 parts by weight, a fuel cell separator was obtained in the same way as in Example 15.

Table 4

| | | Example | | | |
|---|---|---|---|---|---|
| | | 15 | 16 | 17 | 18 |
| Epoxy resin | Type | phenolic novolak | phenolic novolak | o-cresol novolak | o-cresol novolak |
| | Epoxy equivalent weight (g/eq) | 183 | 194 | 199 | 210 |
| | ICI viscosity (Pa·s) | 0.35 | 0.53 | 0.29 | 0.8 |
| Residue on separator surface (%) | | 2 | 2 | 2 | 2 |
| Separator warpage ($\mu$m) | | 70 | 55 | 50 | 40 |
| Contact resistance (m$\Omega$·cm$^2$) | | 5 | 4 | 4 | 3 |
| Static contact angle (°) | | 25 | 30 | 38 | 40 |
| Electrical conductivity of leachate ($\mu$S/cm) | | 1.3 | 1.2 | 1.2 | 1.1 |
| Surface roughness Ra ($\mu$m) | | 1.20 | 1.10 | 1.00 | 1.00 |
| RSm ($\mu$m) | | 95 | 92 | 85 | 88 |
| S ($\mu$m) | | 52 | 50 | 38 | 43 |
| Ra after 2,000 hours immersion at 90°C ($\mu$m) | | 1.20 | 1.10 | 1.00 | 1.00 |
| Ra after 2,000 hours immersion at 150°C ($\mu$m) | | 1.20 | 1.10 | 1.00 | 1.00 |
| Glass transition point (°C) | | 150 | 155 | 160 | 165 |

As shown in Table 4, because the fuel cell separators of Examples 15 to 18 obtained using epoxy resins having epoxy equivalent weights of from 180 to 210 g/eq and ICI viscosities of from 0.15 to 0.80 Pa·s had glass transition points of from 150 to 165°C, the warpage after laser irradiation was held to low values of 40 to 70 $\mu$m. Hence, the contact resistance was low at 3 to 5 m$\Omega$·cm$^2$, giving the separators a high electrical conductivity.

Example 19

Aside from changing the phenolic resin to a novolac-type phenolic resin (hydroxyl equivalent weight, 103 g/eq; ICI viscosity, 0.16 Pa·s), a fuel cell separator composition was prepared and a molded article was obtained therefrom in the same way as in Example 1.

The face of the resulting molded article on which grooves were provided as flow channels for the supply and removal of gases was irradiated with a laser under similar conditions as in Example 3, thereby giving a fuel cell separator.

Example 20

Aside from changing the phenolic resin to a novolac-type phenolic resin (hydroxyl equivalent weight, 104 g/eq; ICI viscosity, 0.22 Pa·s), a fuel cell separator was obtained in the same way as in Example 19.

Example 21

Aside from changing the phenolic resin to a novolac-type phenolic resin (hydroxyl equivalent weight, 105 g/eq; ICI viscosity, 0.55 Pa·s) and changing the amount of epoxy resin included to 16 parts by weight, a fuel cell separator composition was prepared and a molded article was obtained therefrom in the same way as in Example 1.

The face of the resulting molded article on which grooves were provided as flow channels for the supply and removal of gases was irradiated with a laser under similar conditions as in Example 3, thereby giving a fuel cell separator.

Example 22

Aside from changing the phenolic resin to a novolac-type phenolic resin (hydroxyl equivalent weight, 106 g/eq;

ICI viscosity, 0.67 Pa·s), a fuel cell separator was obtained in the same way as in Example 21.

Table 5

| | | Example | | | |
|---|---|---|---|---|---|
| | | 19 | 20 | 21 | 22 |
| Phenolic resin | Type | novolak | novolak | novolak | novolak |
| | Hydroxyl equivalent weight (g/eq) | 103 | 104 | 105 | 106 |
| | ICI viscosity (Pa·s) | 0.16 | 0.22 | 0.55 | 0.67 |
| Residue on separator surface (%) | | 2 | 2 | 2 | 2 |
| Separator warpage ($\mu$m) | | 70 | 55 | 50 | 40 |
| Contact resistance (m$\Omega \cdot$cm$^2$) | | 5 | 4 | 4 | 3 |
| Static contact angle (°) | | 30 | 28 | 38 | 40 |
| Electrical conductivity of leachate ($\mu$S/cm) | | 1.2 | 1.0 | 1.0 | 1.0 |
| Surface roughness Ra ($\mu$m) | | 1.10 | 1.10 | 1.00 | 1.00 |
| RSm ($\mu$m) | | 94 | 91 | 90 | 86 |
| S ($\mu$m) | | 46 | 43 | 42 | 39 |
| Ra after 2,000 hours immersion at 90°C ($\mu$m) | | 1.10 | 1.10 | 1.00 | 1.00 |
| Ra after 2,000 hours immersion at 150°C ($\mu$m) | | 1.10 | 1.10 | 1.00 | 1.00 |
| Glass transition point (°C) | | 155 | 160 | 165 | 165 |

As shown in Table 5, because the fuel cell separators of Examples 19 to 22 obtained using phenolic resins having hydroxyl equivalent weights of from 103 to 106 g/eq and ICI viscosities of from 0.15 to 0.70 Pa·s had glass transition points of from 155 to 165°C, the warpage after laser irradiation was held to low values of 40 to 70 $\mu$m. Hence, the contact resistance was low at 3 to 5 m$\Omega \cdot$cm$^2$, giving the separators a high electrical conductivity.

**Claims**

1.  A method for producing a fuel cell separator comprising:

molding a composition comprising a graphite powder, an epoxy resin, a phenolic resin, a curing accelerator and an internal mold release agent to form a molded article wherein the phenolic resin is in an amount which is from 0.98 to 1.02 hydroxyl equivalents per equivalent of the epoxy resin; and
subjecting a surface of said molded article to laser irradiation treatment wherein said laser irradiation conditions are a power of 100 to 200 W and a pulse duration of 30 to 200 ns; wherein said fuel cell separator possesses characteristics (1) to (6) below:

(1) residues from laser irradiation on a surface of the separator, expressed as an area ratio, of 5% or less as determined using an optical microscope in accordance with paragraph [0036] point [9] of the description;
(2) an arithmetic mean roughness Ra at the separator surface of from 0.80 to 1.50 $\mu$m wherein said arithmetic mean roughness Ra is measured using a surface roughness tester having a probe tip diameter of 5 $\mu$m;
(3) a static contact angle at the separator surface of from 15 to 60° wherein said static contact angle is measured using a CA-DT A contact angle meter from Kywa Interface Science Co., Ltd;
(4) a contact resistance at the separator surface of from 3 to 7 m$\Omega \cdot$cm$^2$ as determined according to the contact resistance method in accordance with paragraph [0036] point [3] of the description;
(5) an electrical conductivity by leachate obtained after immersing the separator for 168 hours in ion-exchanged water at 90°C, under conditions where the weight ratio of ion-exchanged water to separator = 9:1, of 1.2 $\mu$S/cm or less wherein said electrical conductivity is measured at 25 to 30°C; and
(6) changes in surface roughness after 2,000 hours of immersion in, respectively, 90°C ion-exchanged water and 150°C ion-exchanged water, which are each within 0.3 $\mu$m of the surface roughness prior to immersion wherein said changes in surface roughness are measured using a surface roughness tester having a tip probe diameter of 5 $\mu$m.

2. The method of claim 1, wherein the laser irradiation is carried out at an overlap ratio of from 5 to 50%.

3. The method of any one of claims 1 to 2, wherein the laser has an energy distribution that is flat-topped.

4. The method of any one of claims 1 to 3, wherein the laser is an infrared laser.

5. The method of any one of claims 1 to 4, wherein a mean spacing S between local peaks at the separator surface of from 30 to 50 $\mu$m.

6. The method of any one of claims 1 to 5, wherein, after laser irradiation is carried out, absorption bands attributable to epoxy resins and phenolic resins are absent on an infrared absorption spectrum obtained by attenuated total reflectance infrared spectroscopy (ATR) of the separator surface, wherein the ATR is measured using a Fourier trasform infrared spectrometer Nicolet is10 FT-IR from Thermo Fisher Scientific.

7. A fuel cell separator obtained by the method of any one of claims 1 to 6 wherein the fuel cell separator possesses characteristics (1) to (7) below:

(1) residues from laser irradiation on a surface of the separator, expressed as an area ratio, of 5% or less as determined using an optical microscope in accordance with paragraph [0036] point [9] of the description;
(2) an arithmetic mean roughness Ra at the separator surface of from 0.80 to 1.50 $\mu$m wherein said arithmetic mean roughness Ra is measured using a surface roughness tester having a probe tip diameter of 5 pm;
(3) a static contact angle at the separator surface of from 15 to 60° wherein said static contact angle is measured using a CA-DT A contact angle meter from Kywa Interface Science Co., Ltd;
(4) a contact resistance at the separator surface of from 3 to 7 m$\Omega \cdot$cm$^2$ as determined according to the contact resistance method in accordance with paragraph [0036] point [3] of the description;
(5) an electrical conductivity by leachate obtained after immersing the separator for 168 hours in ion-exchanged water at 90°C, under conditions where the weight ratio of ion-exchanged water to separator = 9:1, of 1.2 $\mu$S/cm or less wherein said electrical conductivity is measured at 25 to 30 °C; and
(6) changes in surface roughness after 2,000 hours of immersion in, respectively, 90°C ion-exchanged water and 150°C ion-exchanged water, which are each within 0.3 $\mu$m of the surface roughness prior to immersion wherein said changes in surface roughness are measured using a surface roughness tester having a probe tip diameter of 5 $\mu$m; and
(7) a mean spacing S between local peaks at the separator surface of from 30 to 50 $\mu$m wherein said mean spacing S is measured using a surface roughness tester having a probe tip diameter of 5 $\mu$m.

8. The fuel cell separator of claim 7, wherein the separator surface has a mean spacing S between local peaks of from 35 to 45 $\mu$m.

9. The fuel cell separator of claim 7 or 8 which has a warpage of 100 $\mu$m or less.

10. The fuel cell separator of any one of claims 7 to 9, wherein absorption bands attributable to epoxy resins and phenolic resins are absent on an infrared absorption spectrum obtained by attenuated total reflectance infrared spectroscopy (ATR) of the separator surface following the laser irradiation.

**Patentansprüche**

1. Verfahren zur Herstellung eines Brennstoffzellenseparators, das Folgendes umfasst:

Formen einer Zusammensetzung, die ein Graphitpulver, ein Epoxyharz, ein Phenolharz, einen Härtungsbeschleuniger und ein inneres Formtrennmittel umfasst, um einen Formteil zu bilden, wobei das Phenolharz in einer Menge von 0,98 bis 1,02 Hydroxyläquivalenten pro Äquivalent des Epoxyharzes vorliegt; und
Unterziehen einer Oberfläche des Formteils einer Laserbestrahlungsbehandlung, wobei die Laserbestrahlungsbedingungen eine Leistung von 100 bis 200 W und eine Pulsdauer von 30 bis 200 ns sind; wobei der Brennstoffzellenseparator die nachstehenden Eigenschaften (1) bis (6) besitzt:

(1) Rückstände aus der Laserbestrahlung auf einer Oberfläche des Separators, ausgedrückt als ein Flächenverhältnis, von 5 % oder weniger wie unter Verwendung eines optischen Mikroskops gemäß Absatz [0036] Punkt [9] der Beschreibung bestimmt;

(2) eine arithmetische mittlere Rauigkeit Ra an der Separatoroberfläche von 0,80 bis 1,50 μm, wobei die arithmetische mittlere Rauigkeit Ra unter Verwendung eines Oberflächenrauigkeitstesters mit einem Sondenspitzendurchmesser von 5 μm gemessen wird;

(3) einen statischen Kontaktwinkel an der Separatoroberfläche von 15 bis 60°, wobei der statische Kontaktwinkel unter Verwendung eines CA-DT-A-Kontaktwinkelmessgeräts von Kywa Interface Sience Co., Ltd gemessen wird;

(4) einen Kontaktwiderstand an der Separatoroberfläche von 3 bis 7 mΩ·cm$^2$, wie gemäß dem Kontaktwiderstandsverfahren gemäß Absatz [0036] Punkt [3] der Beschreibung bestimmt;

(5) eine elektrische Leitfähigkeit durch Sickerwasser, die nach 168 Stunden Eintauchen des Separators in ionenausgetauschtes Wasser bei 90 °C unter Bedingungen, bei denen das Gewichtsverhältnis von ionenausgetauschtem Wasser zu Separator = 9:1 ist, erhalten wurde, von 1,2 μS/cm oder weniger, wobei die elektrische Leitfähigkeit bei 25 bis 30 °C gemessen wird; und

(6) Veränderungen in der Oberflächenrauigkeit nach 2.000 Stunden des Eintauchens in 90 °C ionenausgetauschtes Wasser bzw. 150 °C ionenausgetauschtes Wasser, die jeweils innerhalb von 0,3 μm der Oberflächenrauigkeit vor dem Eintauchen sind, wobei die Veränderungen der Oberflächenrauigkeit unter Verwendung eines Oberflächenrauigkeitstesters mit einem Sondenspitzendurchmesser von 5 μm gemessen werden.

2. Verfahren nach Anspruch 1, wobei die Laserbestrahlung bei einem Überlappungsverhältnis von 5 bis 50 % durchgeführt wird.

3. Verfahren nach einem der Ansprüche 1 bis 2, wobei der Laser eine plateauförmige Energieverteilung aufweist.

4. Verfahren nach einem der Ansprüche 1 bis 3, wobei der Laser ein Infrarotlaser ist.

5. Verfahren nach einem der Ansprüche 1 bis 4, wobei ein mittlerer Abstand S zwischen lokalen Peaks an der Separatoroberfläche 30 bis 50 μm beträgt.

6. Verfahren nach einem der Ansprüche 1 bis 5, wobei, nachdem die Laserbestrahlung durchgeführt wurde, die Absorptionsbanden, die Epoxyharzen und Phenolharzen zugeschrieben werden können, auf einem Infrarot-Absorptionsspektrum, das durch abgeschwächte Totalreflexion-Infrarotspektroskopie (ATR) der Separatoroberfläche erhalten wird, abwesend sind, wobei die ATR unter Verwendung eines Fourier-Transform-Infrarotspektrometers Nicolet is10 FT-IR von Thermo Fisher Scientific gemessen wird.

7. Brennstoffzellenseparator, erhalten durch das Verfahren nach einem der Ansprüche 1 bis 6, wobei der Brennstoffzellenseparator die nachstehenden Eigenschaften (1) bis (7) besitzt:

(1) Rückstände aus der Laserbestrahlung auf einer Oberfläche des Separators, ausgedrückt als ein Flächenverhältnis, von 5 % oder weniger wie unter Verwendung eines optischen Mikroskops gemäß Absatz [0036] Punkt [9] der Beschreibung bestimmt;

(2) eine arithmetische mittlere Rauigkeit Ra an der Separatoroberfläche von 0,80 bis 1,50 μm, wobei die arithmetische mittlere Rauigkeit Ra unter Verwendung eines Oberflächenrauigkeitstesters mit einem Sondenspitzendurchmesser von 5 μm gemessen wird;

(3) einen statischen Kontaktwinkel an der Separatoroberfläche von 15 bis 60°, wobei der statische Kontaktwinkel unter Verwendung eines CA-DT-A-Kontaktwinkelmessgeräts von Kywa Interface Science Co., Ltd. gemessen wird;

(4) einen Kontaktwiderstand an der Separatoroberfläche von 3 bis 7 mΩ·cm$^2$, wie gemäß dem Kontaktwiderstandsverfahren gemäß Absatz [0036] Punkt [3] der Beschreibung bestimmt;

(5) eine elektrische Leitfähigkeit durch Sickerwasser, die nach 168 Stunden Eintauchen des Separators in ionenausgetauschtes Wasser bei 90 °C unter Bedingungen, wobei das Gewichtsverhältnis von ionenausgetauschtem Wasser zu Separator = 9:1 ist, erhalten wurde, von 1,2 μS/cm oder weniger, wobei die elektrische Leitfähigkeit bei 25 bis 30 °C gemessen wird; und

(6) Veränderungen in der Oberflächenrauigkeit nach 2.000 Stunden des Eintauchens in 90 °C ionenausgetauschtes Wasser bzw. 150 °C ionenausgetauschtes Wasser, die jeweils innerhalb von 0,3 μm der Oberflächenrauigkeit vor dem Eintauchen sind, wobei die Veränderungen der Oberflächenrauigkeit unter Verwendung eines Oberflächenrauigkeitstesters mit einem Sondenspitzendurchmesser von 5 μm gemessen werden;
(7) einen mittleren Abstand S zwischen lokalen Peaks an der Separatoroberfläche von 30 bis 50 μm, wobei der mittlere Abstand S unter Verwendung eines Oberflächenrauigkeitstesters mit einem Sondenspitzendurchmesser von 5 μm gemessen wird.

8. Brennstoffzellenseparator nach Anspruch 7, wobei die Separatoroberfläche einen mittleren Abstand S zwischen lokalen Peaks von 35 bis 45 μm aufweist.

9. Brennstoffzellenseparator nach Anspruch 7 oder 8, der einen Verzug von 100 μm oder weniger aufweist.

10. Brennstoffzellenseparator nach einem der Ansprüche 7 bis 9, wobei die Absorptionsbanden, die Epoxyharzen und Phenolharzen zugeschrieben werden können, auf einem Infrarot-Absorptionsspektrum, das durch abgeschwächte Totalreflexion-Infrarotspektroskopie (ATR) der Separatoroberfläche nach der Laserbestrahlung erhalten wird, abwesend sind.

## Revendications

1. Procédé de production d'un séparateur de piles à combustible comprenant :

le moulage d'une composition comprenant une poudre de graphite, une résine époxy, une résine phénolique, un accélérateur de durcissement et un agent de démoulage interne pour former un article moulé dans lequel la résine phénolique est en une quantité qui est de 0,98 à 1,02 équivalents hydroxyles par équivalent de la résine époxy ; et
la soumission d'une surface dudit article moulé à un traitement d'irradiation laser dans lequel lesdites conditions d'irradiation laser sont une puissance de 100 à 200 W et une durée d'impulsion de 30 à 200 ns ; dans lequel ledit séparateur de piles à combustible possède les caractéristiques (1) à (6) ci-dessous :

(1) des résidus de l'irradiation laser sur une surface du séparateur, exprimés en rapport surfacique, de 5 % ou moins tel que déterminé en utilisant un microscope optique conformément au paragraphe [0036] point [9] de la description ;
(2) une rugosité moyenne arithmétique Ra au niveau de la surface du séparateur de 0,80 à 1,50 μm dans lequel ladite rugosité moyenne arithmétique Ra est mesurée en utilisant un rugosimètre de surface ayant un diamètre de pointe de sonde de 5 μm;
(3) un angle de contact statique au niveau de la surface du séparateur de 15 à 60° dans lequel ledit angle de contact statique est mesuré en utilisant un appareil de mesure d'angle de contact CA-DT A de Kywa Interface Science Co., Ltd ;
(4) une résistance de contact au niveau de la surface du séparateur de 3 à 7 mΩ·cm$^2$ telle que déterminée selon le procédé de résistance de contact conformément au paragraphe [0036] point [3] de la description ;
(5) une conductivité électrique par lixiviat obtenue après immersion du séparateur pendant 168 heures dans une eau ayant subi un échange d'ions à 90 °C, dans des conditions où le rapport pondéral de l'eau ayant subi un échange d'ions au séparateur = 9/1, de 1,2 μS/cm ou moins dans lequel ladite conductivité électrique est mesurée à 25 à 30 °C ; et
(6) des changements de la rugosité de surface après 2 000 heures d'immersion dans, respectivement, une eau ayant subi un échange d'ions à 90 °C et une eau ayant subi un échange d'ions à 150 °C, qui sont chacun dans les 0,3 μm de la rugosité de surface avant immersion dans lequel lesdits changements de rugosité de surface sont mesurés en utilisant un rugosimètre de surface ayant un diamètre de pointe de sonde de 5 μm.

2. Procédé selon la revendication 1, dans lequel l'irradiation laser est réalisée à un rapport de chevauchement de 5 à 50 %.

3. Procédé selon l'une quelconque des revendications 1 à 2, dans lequel le laser a une distribution d'énergie qui est à sommet plat.

4. Procédé selon l'une quelconque des revendications 1 à 3, dans lequel le laser est un laser infrarouge.

5. Procédé selon l'une quelconque des revendications 1 à 4, dans lequel un espacement moyen S entre les pics locaux au niveau de la surface du séparateur est de 30 à 50 μm.

6. Procédé selon l'une quelconque des revendications 1 à 5, dans lequel, après que l'irradiation laser est réalisée, les bandes d'absorption attribuables aux résines époxy et aux résines phénoliques sont absentes sur un spectre d'absorption infrarouge obtenu par spectroscopie infrarouge à réflectance totale atténuée (ATR) de la surface du séparateur, dans lequel l'ATR est mesurée en utilisant un spectromètre infrarouge à transformée de Fourier Nicolet is10 FT-IR de Thermo Fisher Scientific.

7. Séparateur de piles à combustible obtenu par le procédé selon l'une quelconque des revendications 1 à 6 dans lequel le séparateur de piles à combustible possède les caractéristiques (1) à (7) ci-dessous :

(1) des résidus de l'irradiation laser sur une surface du séparateur, exprimés en rapport surfacique, de 5 % ou moins tel que déterminé en utilisant un microscope optique conformément au paragraphe [0036] point [9] de la description ;
(2) une rugosité moyenne arithmétique Ra au niveau de la surface du séparateur de 0,80 à 1,50 μm dans lequel ladite rugosité moyenne arithmétique Ra est mesurée en utilisant un rugosimètre de surface ayant un diamètre de pointe de sonde de 5 μm;
(3) un angle de contact statique au niveau de la surface du séparateur de 15 à 60° dans lequel ledit angle de contact statique est mesuré en utilisant un appareil de mesure d'angle de contact CA-DT A de Kywa Interface Science Co., Ltd ;
(4) une résistance de contact au niveau de la surface du séparateur de 3 à 7 mΩ·cm$^2$ telle que déterminée selon le procédé de résistance de contact conformément au paragraphe [0036] point [3] de la description ;
(5) une conductivité électrique par lixiviat obtenue après immersion du séparateur pendant 168 heures dans une eau ayant subi un échange d'ions à 90 °C, dans des conditions où le rapport pondéral de l'eau ayant subi un échange d'ions au séparateur = 9/1, de 1,2 μS/cm ou moins dans lequel ladite conductivité électrique est mesurée à 25 à 30 °C ; et
(6) des changements de la rugosité de surface après 2 000 heures d'immersion dans, respectivement, une eau ayant subi un échange d'ions à 90 °C et une eau ayant subi un échange d'ions à 150 °C, qui sont chacun dans les 0,3 μm de la rugosité de surface avant immersion dans lequel lesdits changements de rugosité de surface sont mesurés en utilisant un rugosimètre de surface ayant un diamètre de pointe de sonde de 5 μm ; et
(7) un espacement moyen S entre les pics locaux au niveau de la surface du séparateur de 30 à 50 μm dans lequel ledit espacement moyen S est mesuré en utilisant un rugosimètre de surface ayant un diamètre de pointe de sonde de 5 μm.

8. Séparateur de piles à combustible selon la revendication 7, dans lequel la surface du séparateur a un espacement moyen S entre les pics locaux de 35 à 45 μm.

9. Séparateur de piles à combustible selon la revendication 7 ou 8 qui a un gauchissement de 100 μm ou moins.

10. Séparateur de piles à combustible selon l'une quelconque des revendications 7 à 9, dans lequel les bandes d'absorption attribuables aux résines époxy et aux résines phénoliques sont absentes sur un spectre d'absorption infrarouge obtenu par spectroscopie infrarouge à réflectance totale atténuée (ATR) de la surface du séparateur suite à l'irradiation laser.

# FIG.1

# FIG.2

# FIG.3

# FIG.4

# FIG.5

**EP 2 615 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1542300 A2
- EP 2048731 A1
- JP 2006019252 B
- US 20060263670 A1
- JP 4257544 B
- JP 2005197222 A
- JP 2006331673 A
- JP 2004335121 A
- JP 4148984 B
- JP 2009152176 A